# EUROPEAN PATENT APPLICATION

(11) **EP 4 366 345 A1**
(43) Date of publication of application: **08.05.2024**
(21) Application number: 22846196.8
(22) Date of filing: 19.07.2022
(51) Int. Cl.: H04W 4/50, H04W 8/02, H04W 60/00, H04W 48/18, H04W 12/06

(54) **DEVICE AND METHOD FOR SUPPORTING NETWORK FUNCTION OPENING SERVICE FOR TERMINAL IN WIRELESS COMMUNICATION SYSTEM**

(30) Priority: 19.07.2021 KR 20210094480
(71) Applicant: Samsung Electronics Co., Ltd., Suwon-si, Gyeonggi-do 16677 (KR)
(72) Inventor: KIM, Hyesung, Suwon-si, Gyeonggi-do 16677 (KR); PARK, Sungjin, Suwon-si, Gyeonggi-do 16677 (KR); LEE, Jicheol, Suwon-si, Gyeonggi-do 16677 (KR)
(74) Representative: Gulde & Partner
(86) International application number: PCT/KR2022/010540
(87) International publication number: WO 2023/003326

(57) **Abstract**

According to an embodiment of the disclosure, an operation method of a home edge configuration server (hECS) includes receiving, from a user equipment (UE), a first service provisioning request including an identifier of a visited public land mobile network (vPLMN) in which the UE is served, identifying at least one visited edge configuration server (vECS) available in the vPLMN in case that roaming status of the UE is identified based on the identifier of the vPLMN, and transmitting, to the UE, a provisioning response message including information about the identified at least one vECS, wherein a second service provisioning request message is transmitted to one of the at least one vECS, from the UE, based on the information about the at least one vECS.

## Description

### Technical Field

The disclosure relates to a wireless communication system, and more particularly, to an apparatus and method for providing a network capability exposure service for a user equipment.

### BACKGROUND ART

To meet ever-increasing demand with respect to wireless data traffic since the commercialization of the 4th generation (4G) communication system, there have been efforts to develop an advanced 5th generation (5G) or pre-5G communication system. For this reason, the 5G or pre-5G communication system is also called a beyond 4th-generation (4G) network communication system or post long-term evolution (LTE) system.

Implementation of the 5G communication system using ultrahigh frequency (millimeter wave (mmWave)) bands, e.g., 60 giga hertz (GHz) bands, is being considered to attain higher data transfer rates. To reduce propagation loss of radio waves and increase a transmission range of radio waves in the ultrahigh frequency bands, beamforming, massive multiple-input multiple-output (MIMO), full dimensional MIMO (FD-MIMO), array antenna, analog beamforming, and large-scale antenna techniques are under discussion.

To improve system networks, technologies for advanced small cells, cloud radio access networks (RANs), ultra-dense networks, device to device (D2D) communication, wireless backhaul, moving networks, cooperative communication, coordinated multi-points (CoMP), reception-end interference cancellation and the like are also being developed in the 5G communication system.

In addition, in the 5G system, an advanced coding modulation (ACM) method, e.g., hybrid FSK and QAM modulation (FQAM), sliding window superposition coding (SWSC), and advanced access technology, e.g., filter bank multi carrier (FBMC), non-orthogonal multiple access (NOMA), and sparse code multiple access (SCMA) are being developed.

The 5G system is considering support for various services in contrast to the existing 4G system. For example, the most representative services may include an enhanced mobile broad band (eMBB) communication service, an ultra-reliable and low latency communication (URLLC) service, a massive machine type communication (mMTC) service, an evolved multimedia broadcast/multicast service (eMBMS), etc. A system for providing the URLLC service may be referred to as a URLLC system, and a system for providing the eMBB communication service may be referred to as an eMBB system. The terms 'service' and 'system' may be interchangeably used.

Among them, the URLLC service is considered not in the existing 4G system but newly in the 5G system, and required to satisfy ultra-high reliability, e.g., a packet error rate of about 10^{- 5}, and low latency, e.g., about 0.5 msec, as compared to the other services. To meet such stringent requirements of the URLLC service, a shorter transmission time interval (TTI) than in the eMBB service may need to be applied, and various operation schemes that use the short TTI are being considered.

In the meantime, the Internet is evolving from a human-oriented connectivity network where humans create and consume information to an Internet of things (loT) network where distributed entities or things send, receive and process information without human intervention. Internet of Everything (IoE) technologies, in which a big data processing technology through connection with a cloud server, for example, are combined with an loT technology, have also emerged. To implement loT, various technologies, such as a sensing technology, a wired/wireless communication and network infrastructure, a service interfacing technology, and a security technology are required, and even technologies for sensor networks, machine to machine (M2M) communication, machine type communication (MTC) for connection between things are being studied these days.

In the loT environment, intelligent Internet technology (IT) services that create new values for human life by collecting and analyzing data generated from connected things may be provided. IoT may be applied to a variety of areas, such as smart homes, smart buildings, smart cities, smart cars or connected cars, smart grids, health care, smart home appliances and advanced medical services through convergence and combination between existing information technologies (IT) and various industrial applications.

In this regard, various attempts to apply the 5G communication system to the loT network are being made. For example, technologies regarding sensor network, M2M, MTC, etc., are implemented by the 5G communication technologies, such as beamforming, MIMO, array antenna schemes, etc. Even application of a cloud radio access network (cloud RAN) as the aforementioned big data processing technology may be an example of convergence of 5G and loT technologies.

With the development of the aforementioned technologies and mobile communication systems, it is possible to provide various services, and there is a need for a method to provide a network function opening service to terminals.

### Disclosure

### Technical Problem

Embodiments of the disclosure provide a method and apparatus for effectively providing services in a wireless communication system.

### Technical Solution

According to an embodiment of the disclosure, a method of operating a home edge configuration server (hECS) may include receiving, from a user equipment (UE), a first service provisioning request including an identifier of a visited public land mobile network (vPLMN) in which the UE is served, identifying at least one visited edge configuration server (vECS) available in the vPLMN in case that roaming status of the UE is identified based on the identifier of the vPLMN, and transmitting, to the UE, a provisioning response message including information about the identified at least one vECS, wherein a second service provisioning request message is transmitted to one of the at least one vECS, from the UE, based on the information about the at least one vECS.

### Advantageous Effects

An embodiment of the disclosure provides an apparatus and method capable of effectively providing a service in a wireless communication system.

### Description of Drawings

FIG. 1 illustrates a hierarchical structure of an edge computing application, according to an embodiment of the disclosure.
FIG. 2 is a flowchart illustrating an operation method of an edge enabler client (EEC) for using an edge computing service, according to an embodiment of the disclosure.
FIG. 3 is a sequence chart of a method by which a user equipment (UE) transmits a service provisioning request message to a visited edge configuration server (vECS), according to an embodiment of the disclosure.
FIG. 4 is a sequence chart of a method by which a UE transmits a service provisioning request message to a vECS, according to an embodiment of the disclosure.
FIG. 5 is a sequence chart of a method by which a UE receives a service provisioning response message from a vECS, according to an embodiment of the disclosure.
FIG. 6 is a diagram for describing a structure of a UE, according to an embodiment of the disclosure.
FIG. 7 is a diagram for describing a structure of an entity of an edge computing system, according to an embodiment of the disclosure.

### Best Mode

Embodiments of the disclosure provide a method and apparatus for supporting an edge computing service for a roaming user equipment (UE).

In a wireless communication system according to an embodiment, an operation method of a home edge configuration server (hECS) includes receiving, from a UE, a first service provisioning request including an identifier of a visited public land mobile network (vPLMN) in which the UE is served; identifying at least one visited edge configuration server (vECS) available in the vPLMN in case that roaming status of the UE is identified based on the identifier of the vPLMN; and transmitting, to the UE, a provisioning response message including information about the identified at least one vECS, wherein the a second service provisioning request message is transmitted to one of the at least one vECS, from the UE, based on the information about the at least one vECS.

According to an embodiment of the disclosure, an operation method of a UE in a wireless communication system includes
transmitting, to an hECS, a first service provisioning request including an identifier of a vPLMN in which the UE is served; receiving a provisioning response message including information about at least one vECS available in the vPLMN in response to the first service provisioning request, based on identification of roaming status of the UE; and transmitting a second service provisioning request message to one of the at least one vECS, based on the information about the at least one vECS.

According to an embodiment, an hECS in a wireless communication system includes a transceiver; and a processor coupled with the transceiver, the processor configured to receive, from a UE, a first service provisioning request including an identifier of a vPLMN in which the UE is served, identify at least one vECS available in the vPLMN in case that roaming status of the UE is identified based on the identifier of the vPLMN, and transmit, to the UE, a provisioning response message including information about the identified at least one vECS, wherein a second service provisioning request message is transmitted to one of the at least one vECS, from the UE, based on the information about the at least one vECS.

According to an embodiment, an UE in a wireless communication system includes a transceiver; and a processor coupled with the transceiver, the processor configured to transmit, to an hECS, a first service provisioning request including an identifier of a vPLMN in which the UE is served, receive a provisioning response message including information about at least one vECS available in the vPLMN in response to the first service provisioning request, based on identification of roaming status of the UE, and transmit a second service provisioning request message to one of the at least one vECS, based on the information about the at least one vECS.

### Mode for Invention

Embodiments of the disclosure will now be described with reference to accompanying drawings. It is noted that in the drawings, like elements are denoted by like reference numerals. Detailed descriptions of functions and features known to the public, which might obscure the gist of the disclosure, will be omitted.

Technological content well-known in the art but not directly related to the disclosure will be omitted in the following description. Through the omission of content that might otherwise obscure the subject matter of the disclosure, the subject matter will be understood more clearly.

For the same reason, some parts in the accompanying drawings are exaggerated, omitted or schematically illustrated. The size of the respective elements may not fully reflect their actual size. Like numbers refer to like elements throughout the drawings.

Advantages, features and methods for achieving them will be understood more clearly when the following embodiments are read with reference to the accompanying drawings. The embodiments of the disclosure may, however, be embodied in many different forms and should not be construed as limited to the embodiments set forth herein; rather, these embodiments of the disclosure are provided so that this disclosure will be thorough and complete, and will fully convey the scope of the embodiments of the disclosure to those of ordinary skill in the art. Like numbers refer to like elements throughout the specification.

It may be understood that respective blocks and combinations of the blocks in processing flowcharts will be performed by computer program instructions. The computer program instructions may be loaded on a processor of a universal computer, a special-purpose computer, or other programmable data processing equipment, and thus they generate means for performing functions described in the block(s) of the flowcharts when executed by the processor of the computer or other programmable data processing equipment. The computer program instructions may also be stored in computer-executable or computer-readable memory that may direct the computers or other programmable data processing apparatus to function in a particular manner, such that the instructions stored in the computer-executable or computer-readable memory may produce an article of manufacture including instruction means that perform the functions specified in the flowchart blocks(s). The computer program instructions may also be loaded onto the computer or other programmable data processing apparatus to cause a series of operational steps to be performed on the computer or other programmable apparatus to produce a computer implemented process such that the instructions that are executed on the computer or other programmable apparatus provide operations for implementing the functions specified in the flowchart block(s).

Furthermore, each block may represent a part of a module, segment, or code including one or more executable instructions to perform particular logic function(s). It is noted that the functions described in the blocks may occur out of order in some alternative embodiments. For example, two successive blocks may be performed substantially at the same time or the blocks may sometimes be executed in reverse order.

Furthermore, the term 'unit' or 'module' as herein used refers to a software or hardware component, such as field programmable gate array (FPGA) or application specific integrated circuit (ASIC) which plays some role. However, the module is not limited to software or hardware. The module may be configured to be stored in an addressable storage medium, or to execute one or more processors. For example, the modules may include components, such as software components, object-oriented software components, class components and task components, processes, functions, attributes, procedures, subroutines, segments of program codes, drivers, firmware, microcodes, circuits, data, databases, data structures, tables, arrays, and variables. Functions served by components and modules may be combined into a smaller number of components and modules, or further divided into a larger number of components and modules. Moreover, the components and modules may be implemented to execute one or more central processing units (CPUs) in a device or security multimedia card.

In the following description, a BS is an entity for performing resource allocation for a terminal, and may be at least one of a Node B, base station (BS), eNode B (eNB), gNode B (gNB), a radio access unit, a base station controller, or a node on a network. The terminal may include a user equipment (UE), a mobile station (MS), a cellular phone, a smart phone, a computer, or a multimedia system capable of performing a communication function. Furthermore, embodiments of the disclosure, which will now be described, may be equally applied to other communication systems with technical backgrounds or channel types similar to the embodiments of the disclosure. Furthermore, embodiments of the disclosure will also be applied to different communication systems with some modifications to such an extent that does not significantly deviate from the scope of the disclosure when judged by those of ordinary skill in the art.

Herein, terms to identify access nodes, terms to refer to network entities or network functions (NFs), terms to refer to objects in an edge computing system, terms to refer to messages, terms to refer to interfaces between network entities, terms to refer to interfaces between objects in the edge computing system, terms to refer to identification information, etc., are examples for convenience of explanation. Accordingly, the disclosure is not limited to the terms as herein used, and may use different terms to refer to the items having the same meaning in a technological sense.

Hereinafter, for convenience of explanation, some of the terms and names defined by the 3rd generation partnership project (3GPP) long term evolution (LTE) standard and/or a 3GPP new radio (NR) standard will be used. The disclosure is not, however, limited to the terms and definitions, and may be equally applied to any systems that conform to other standards.

Operating principles of embodiments of the disclosure will now be described with reference to accompanying drawings. Terms as will now be mentioned are ones defined with consideration for functions in the disclosure. They may vary depending on practice or intention of the user or operator, so definitions of them need to be made according to descriptions throughout the specification.

The disclosure provides a method for supporting an edge computing service for a roaming UE.

An embodiment of the disclosure may provide a method by which the UE may identify whether the edge computing service is available through a mobile communication network in which the UE is roaming, a method of providing the UE information about an edge computing configuration server and an edge enabler server which are accessible in the mobile communication network in which the UE is roaming, etc.

According to an embodiment of the disclosure, the UE is involved in using a network exposure service, making it easy to reflect a service state of a client in the UE and allowing the UE to directly manage to provide UE/subscriber information stored in the network to the outside.

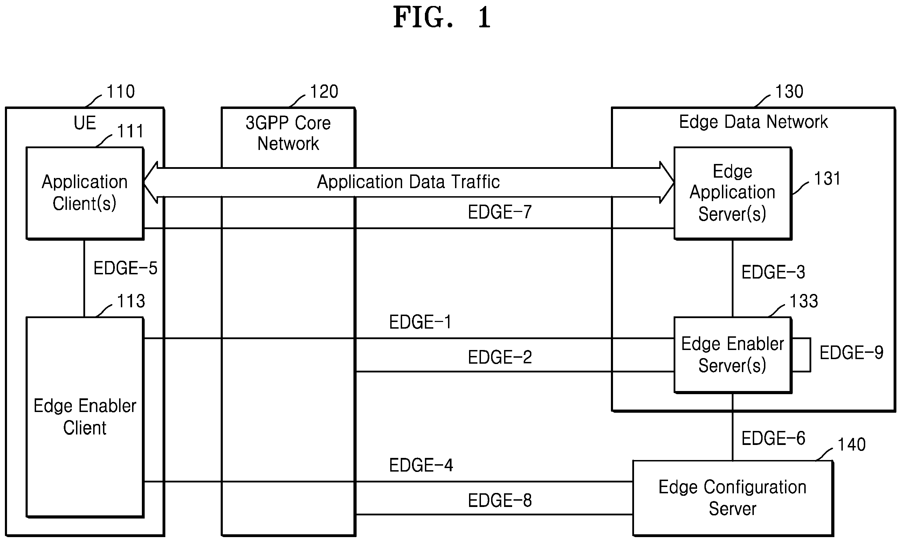

FIG. 1 illustrates a hierarchical structure of an edge computing application, according to an embodiment of the disclosure.

Referring to FIG. 1, shown are networks and edge computing entities. An edge computing system may include an edge enabler server (EES) 133, an edge configuration server (ECS) 140, an edge enabler client (EEC) 113, etc. The edge enabler server 133 sets up an edge hosting environment (or edge computing platform) and may know information about an edge application server (EAS) 131 operating in the edge hosting environment.

In an embodiment, the edge enabler server 133 may perform a function of connecting an application client 111 in a UE 110 to the edge application server 131 in the edge hosting environment by negotiating with the UE 110. The edge enabler client 113 may be embedded in the UE 110 that supports the edge computing system. A layer in which edge enabler interworking with the edge enabler client 113 is performed may be referred to as an edge enabling layer. In the disclosure, the UE in which the edge enabler client 113 is embedded to configure the edge enabling layer may not only be a smart phone, but also an Internet of Things (loT) device, a vehicle or the like.

In an embodiment, the edge configuration server 140 may know information about EESs deployment, and perform a function to transmit configuration information for using an edge computing service to the UE 110. The configuration information may include edge data network connection information (e.g., a data network name, single-network slice selection assistance information (S-NSSAI), etc.), an edge data network service area (e.g., a cell list, a list of tracking area, or a public land mobile network (PLMN) identity (ID)), edge enabler server connection information (e.g., a uniform resource identifier (URI)), etc. The edge data network service area may be an area in which the edge enabler server is available and which is set up by the edge enabler server. Based on this configuration information, the UE may get information about an edge enabler server accessible at a certain location. When the edge configuration server 140 may know the information about the edge application server 131 operating in the edge hosting environment of the particular edge enabler server 133, the UE 110 may also obtain the information through the edge enabler client 113.

In an embodiment, the edge application server 131 refers to a third-party application server operating in the edge computing system. The edge application server 131 operates in an infrastructure provided by the edge hosting environment, and may thus provide an ultra-low latency service at a location near the UE.

In an embodiment, the UE 110 may include the application client 111, the edge enabler client 113 that links the application client 111 to the edge computing service, and a mobile terminal (MT) that accesses the mobile communication system. An application of the UE is an application provided by a third party, and may refer to a client application program operating in the UE for a particular application service. Multiple applications may operate in the UE. At least one of the applications may use a mobile edge computing (MEC) service. The edge enabler client 113 in the UE 110 may refer to a client to perform an operation in the UE required for using the edge computing service. The edge enabler client 113 may determine what application is able to use the edge computing service and perform an operation of connecting a network interface to the edge application server 131 for providing the edge computing service so that data from the application client 111 may be sent to the edge application server 131. An operation of establishing data connection to use the edge computing service may be performed in a 3GPP communication layer through a mobile terminal. The 3GPP communication layer refers to a layer for performing a modem function to use the mobile communication system, which may set up radio connection for data communication, register the UE in the mobile communication system, establish connection for data transmission to the mobile communication system, and serve for data transmission and reception.

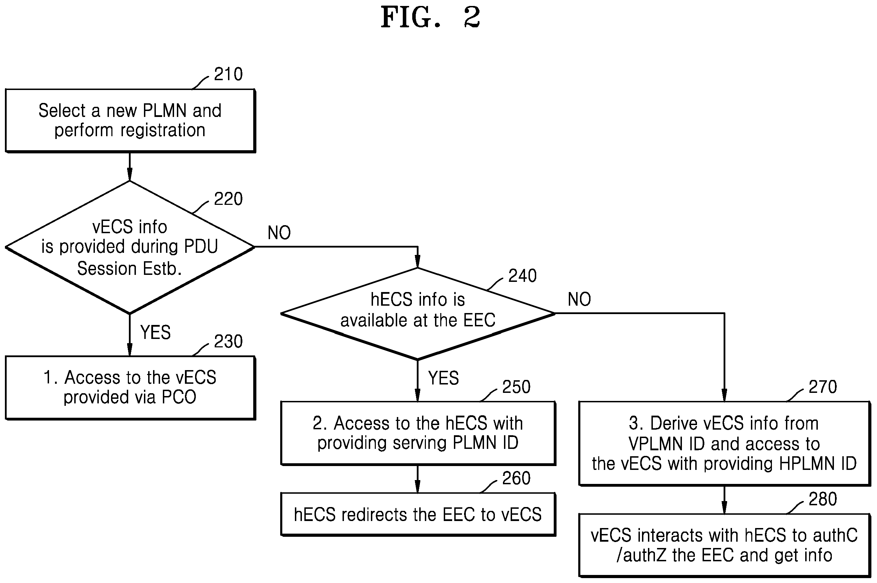

FIG. 2 is a flowchart illustrating an operation method of an edge enabler client (EEC) for using an edge computing service, according to an embodiment of the disclosure.

Referring to FIG. 2, in operation 210, the UE may select a new PLMN and perform a registration procedure. Subsequent operations of the EEC for using the edge computing service may be as follows.

In operation 220, the EEC may identify whether the UE has received information about a visited edge configuration server (vECS, an ECS available in a visited PLMN (VPLMN)) while the UE is establishing a protocol data unit (PDU) session. In an embodiment, information about the vECS may be information about a vECS received from a VPLMN (visited PLMN) through a protocol configuration option.

In operation 230, when there is the information about the vECS received from the VPLMN through the protocol configuration option (PCO) while the UE is generating a PDU session, the EEC may access the vECS based on the information and perform service provisioning. When there is no vECS information received by the UE from the VPLMN, in operation 240, the EEC may determine whether information about a home edge configuration server (hECS, an ECS available in a home PLMN) is yet stored.

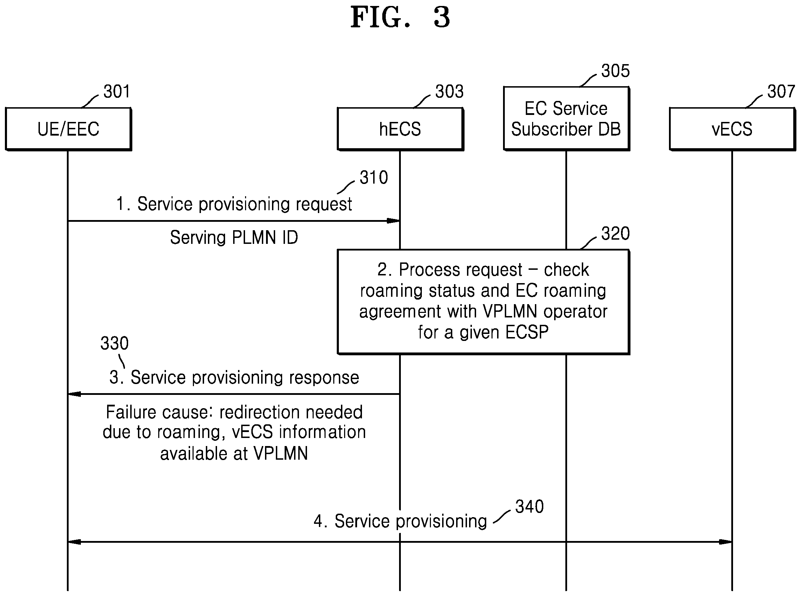

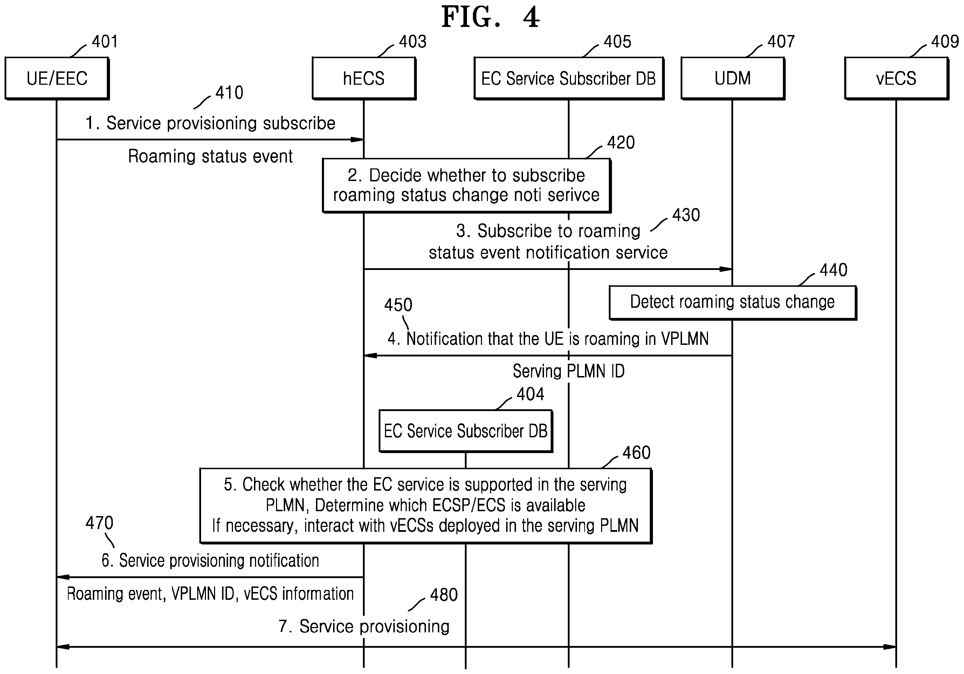

When there is no vECS information received by the UE from the VPLMN and the information about an hECS (an ECS that has been used in the home VPLMN) is available (e.g., when hECS address information is stored in the UE), the EEC in the UE may access the hECS in operation 250, and get information (an identifier, a provider identity, address information, a data network name, network slice information, etc.) about an edge data network (EDN) and the EES available in the vECS or VPLMN in operation 260. A specific embodiment will be described in connection with FIGS. 3 and 4.

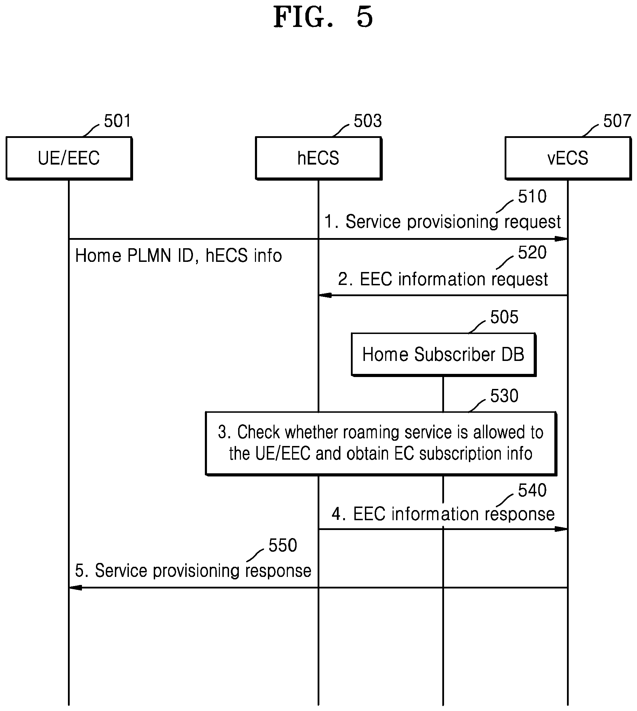

When there is no vECS information received by the UE from the VPLMN and no hECS information is stored, the EEC may derive and use vECS address information from the VPLMN identifier in operation 270. For example, by combining the VPLMN identifier and an identity of the edge computing service provider (ECSP ID) or ECSP codes allocated to the edge computing service provider, a vECS address may be generated as follows: ("ECS<ECSP-id/code>. ECS.mnc<MNC>.mcc<MCC>.3gppnetwork.org"). The EEC may use the vECS address generated as above to request service provisioning from the vECS. In operation 280, when receiving a service provisioning request message from the EEC in the roaming UE, the vECS may communicate with the hECS for authentication of the EEC. A specific embodiment will be described in connection with FIG. 5.

FIG. 3 is a sequence chart of a method by which a UE transmits a service provisioning request message to a vECS, according to an embodiment of the disclosure.

Referring to FIG. 3, in operation 310, an EEC 301 may transmit a service provisioning request message to a hECS 303. In an embodiment, the EEC 301 may use hECS address information stored in the UE to request information about an edge computing service available in the VPLMN from the hECS 303. The information about the edge computing service available in the VPLMN may include an identifier and information about an address of a vECS (an ECS available in the VPLMN), a vECS provider identifier (ECSP ID), etc. The EEC may provide a serving PLMN ID (VPLMN ID) to the hECS to obtain information about an edge computing service available in the VPLMN.

Such a request operation may be performed by the EEC transmitting the service provisioning request message including the serving PLMN ID and UE ID or EEC ID to the hECS. Alternatively, an extra request message may be defined and used. For example, an ECS may define and use an extra roaming service application programming interface (API) to support roaming. In this case, the EEC may transmit a roaming service request message to the hECS, and information included in the message may be the same as described above.

In an embodiment, the EEC may recognize that the ID of the PLMN, to which the UE makes access and registers itself, has changed (for example, obtain information about a newly accessed PLMN ID and an equivalent PLMN ID list of the HPLMN from a modem), and transmit, to the ECS, the service provisioning request message including a serving PLMN ID. Specifically, only when the ID of the PLMN, to which the UE newly makes access and registers itself, is not included in the equivalent PLMN ID list of a previous PLMN ID, the serving PLMN ID may be included when service provisioning is newly performed. The EEC may obtain and use the equivalent PLMN ID list from the modem or a USIM. Information stored in the modem may be a list of equivalent PLMNs received from an access and mobility management function (AMF) after the UE registers in an HPLMN core network, and an equivalent PLMN ID list stored in the USIM may be information preset by an operator.

In operation 320, when a serving PLMN ID is included in a message received from the EEC 301, the hECS 303 may identify a VPLMN, to which the UE having the EEC currently makes access and is registered, as the serving PLMN ID. In an embodiment, the hECS may determine whether it is possible to provide an edge computing service in the VPLMN for the UE having the EEC which has transmitted the service provisioning request message. In identifying whether it is possible to provide the edge computing service, the hECS may identify whether it is possible to provide the service for each edge computing service provider (ECSP) that provides an edge computing service in the VPLMN. Such identification of whether the edge computing roaming service is provided for a particular EEC or UE may be made through a subscriber information database that stores subscriber information of the UE having the EEC. For example, the hECS may provide information about a particular EEC (EEC ID or UE ID) to the subscriber information database and obtain related edge computing service subscribe information. The edge computing service subscribe information may include information about whether a service provided by a certain PLMN operator and a certain edge computing service provider is available for the UE subscriber. Furthermore, additional information (an address and an identifier) about an ECS available in a certain PLMN may be included in the edge computing service subscribe information. The subscriber information database may be included in a user data management (UDM) device used in a 5G system or may be an extra edge computing service subscriber information database. When the hECS is a third-party edge computing service provider (e.g., a cloud service provider) instead of a PLMN operator, the hECS may operate and use the extra edge computing service subscriber information database.

When there is no information about a serving PLMN ID in a message transmitted by the EEC to the hECS in operation 310, the hECS may obtain roaming status information of the UE (whether the UE is roaming, and when the UE is roaming, a VPLMN ID; information indicating what PLMN it is that the UE is roaming in) from the UDM of the hPLMN of the UE. In an embodiment, the hECS may identify with the information obtained from the UDM what VPLMN it is that the UE is roaming in, and then identify ECS information (identifier and address information) and ECSP information (ECSP identifier) available in the VPLMN (this information is specified in roaming agreement between an HPLMN operator and a VPLMN operator, and hECS may determine related information through the roaming agreement information).

In an embodiment, when the hECS has no trust in information provided from the UE, the hECS may check information about a VPLMN in which the UE is located through the UDM and request information about the EEC or a UE subscriber in which the EEC is installed from the edge computing service subscriber database even though the EEC has provided information about the serving PLMN ID.

In operation 330, a hECS 305 may transmit, to the EEC 310, a response to the request message received from the EEC of operation 310. The response message may include vECS information (identifier and address information, provider ID (ECSP ID) information, a data network name (DNN) and network slice information required to establish a PDU session to access the vECS, etc.) available in the VPLMN, to which the UE currently makes access and is registered. When the message transmitted by the EEC in operation 310 is a service provisioning request message, a message that the hECS responds to the EEC may include an indicator indicating a service provisioning failure and a need of redirection due to roaming as a failure cause, and provide vECS information indicating where to redirect as well.

In operation 340, the EEC 301 may use the vECS information provided from the hECS 303 to transmit a service provisioning request message to the vECS 307. When information about multiple ECSs is provided from the hECS 303, the EEC 301 may perform service provisioning by selecting an ECS according to the location of the UE or an ECS of a preferred provider.

FIG. 4 is a sequence chart of a method by which a UE transmits a service provisioning request message to a vECS, according to an embodiment of the disclosure.

Referring to FIG. 4, in operation 410, an EEC 401 may transmit a service provisioning subscribe request message to a hECS 403. In an embodiment, the service provisioning subscribe request message may include a roaming status event indicator (or a roaming event indicator). The roaming status event indicator (or the roaming event indicator) may be included to give the UE a notification about vECS information available in the VPLMN to which the UE makes access and is registered and edge data network configuration information in the VPLMN when a roaming situation of the UE having the EEC occurs.

In an embodiment, when the EEC has only a limited access to a modem or USIM in the UE (e.g., in a case of an EEC provided by a third-party service provider instead of an EEC provided by the UE manufacturer or communication operator), the EEC may hardly know the roaming status of the UE. In this case, the EEC has the roaming status event indicator (or the roaming event indicator), allowing the hECS to determine whether the UE having the EEC is roaming when a roaming situation occurs, and receive vECS information available in the VPLMN to which the UE makes access and is registered and edge data network configuration information.

In operation 420, the hECS 403 may work with an edge computing service subscriber database 405 to determine whether it is possible to provide a roaming service for the EEC, when the service provisioning subscribe request message received from the EEC 401 includes the roaming status event indicator (or the roaming event indicator). In an embodiment, operation 420 may correspond to operation 320 of FIG. 3. For example, the hECS 403 may provide information about a particular EEC (EEC ID, UE ID, etc.) to the edge computing service subscriber database 405 and identify related edge computing service subscribe information. The edge computing service subscribe information may include whether a roaming service is supported for the EEC and when it is supported, information about a particular PLMN operator (PLMN ID) and particular edge computing service provider information (ECSP ID).

When the hECS 403 determines that a roaming status of the UE having the EEC needs to be monitored in operation 420, the hECS 403 may transmit a roaming status event notification service subscribe request message to a UDM 407 in operation 430. The request message may include an identifier of the UE.

In operation 440, the UDM 403 may detect occurrence of a roaming status change event of the UE, the roaming status of which is to be monitored in operation 430. For example, the UDM 403 may determine that the roaming status change event has occurred when the UE accesses and is registered to the VPLMN.

In operation 450, the UDM 403 may provide hECS with an indicator indicating that the UE is roaming and ID information of the VPLMN to which the UE is registered in the roaming status event notification service message, when the roaming status change event has occurred for the UE, the roaming status of which is to be monitored in operation 430 (e.g., when the UE accesses and registers in the VPLMN).

In operation 460, based on the ID of the VPLMN in which the UE is roaming in the notification message received from the UDM 407 in operation 450, the hECS 403 may identify whether the VPLMN is able to provide an edge computing service to the UE having the EEC. The identification procedure may be performed by identifying the edge computing service subscribe information and information about roaming agreement with the VPLMN operator as in operation 320 of FIG. 3.

In operation 470, the hECS 403 may transmit, to the EEC 401, an indicator indicating that roaming has occurred, and vECS information available in the roaming VPLMN (identifier and address information, provider ID information, a DNN and network slice information required to establish a PDU session to access the vECS, etc.).

In operation 480, the EEC 401 may use the vECS information provided from the hECS 403 to transmit a service provisioning request message to the vECS 409. When the EEC 401 receives information about multiple ECSs from the hECS 403, the EEC 401 may perform service provisioning by selecting an ECS according to the location of the UE or an ECS of a preferred provider.

In an embodiment of FIG. 4, even when the EEC has not put a roaming event indicator to the service provisioning subscribe request message, the hECS may monitor a roaming status of the UE according to an ECS internal policy or configuration (e.g., monitoring is available by subscribing a UE roaming status notification service of the UDM), and provide the EEC with information about an edge computing service available in the VPLMN when a roaming situation occurs. Alternatively, even though the roaming event indicator is not included in the service provisioning subscribe request message transmitted from the EEC to the hECS in operation 420, the hECS may monitor a roaming status of the UE having the EEC when roaming support is indicated as enabled or allowed in the subscriber information in the edge computing service subscriber database.

There may be an occasion when the edge computing service provided in the VPLMN in which the UE is roaming is also managed by the hECS in the embodiments of FIGS. 3 and 4. For example, this occasion may correspond to a case that one ECS provides edge computing service configuration information for each PLMN after one edge computing service provider makes agreement with multiple PLMN operators. In this case, as the edge computing service of the VPLMN is also managed by the hECS although the EEC is roaming in the VPLMN, information provided by the hECS to the EEC in operation 330 of FIG. 3 or operation 470 of FIG. 4 may not include information about a new ECS but only include edge computing service configuration information (an EES address, an EES ID, a DNN, network slice information, etc.). Furthermore, the EEC may continue to use the existing hECS that has been used, in the VPLMN, without the need to access the new ECS.

FIG. 5 is a sequence chart of a method by which a UE receives a service provisioning response message from a vECS, according to an embodiment of the disclosure.

Referring to FIG. 5, in operation 510, when an EEC 501 obtains vECS address information (e.g., as aforementioned by referring to the FIG. 2, when the UE obtains vECS information while establishing a PDU session for the VPLMN or obtains vECS information from an hECS), the EEC 501 may transmit, to a vECS 507, a service provisioning request message to use an edge computing service in the VPLMN. The service provisioning request message may include an HPLMN ID, hECS information (an address, an identifier, a provider ID (ECSP ID), etc.), an EEC ID, a UE ID, etc.

In an embodiment, when the service provisioning request message received from the EEC 501 includes the HPLMN ID and the hECS information, the vECS 507 may identify whether there is edge computing service agreement (including roaming agreement) between a PLMN operator identified with the HPLMN ID and a vECS provider (ECSP) to identify whether it is possible to provide a service to the EEC. Furthermore, in operation 520, the vECS 507 may use the hECS information received from the EEC 501 to transmit an EEC information request message to the hECS 503 to identify information about the EEC. The information provided by the vECS 507 to the hECS 503 may include EEC information (an EEC ID, an ID of the UE having the EEC, an ID of the VPLMN that supports the vECS, etc.)

In operation 530, the hECS 503 may perform a procedure of identifying an EEC corresponding to the information included in the EEC information request message received from the vECS 507. For example, the hECS 503 may provide the EEC information (the EEC ID, the UE ID, etc.) received from the vECS 507 to an edge computing service subscriber database 505, and obtain information about a UE subscriber for the EEC (e.g., whether it is possible to provide an edge computing roaming service for the EEC through the VPLMN and the vECS).

In operation 540, after the identification operation in operation 530, the hECS 503 may transmit, to the vECS, a response message to the EEC information request of operation 520. The message may include information about whether it is possible to provide the edge computing service to the EEC.

In an embodiment, the vECS 507 may determine whether it is possible to provide the edge computing service for the EEC through the EEC information request response message received from the hECS 503. When it is possible to provide the edge computing service for the EEC, the vECS 507 may provide the EEC 501 with information about an EES available through the VPLMN in operation 550. The information about the EES may include an EES ID, EES address information, a DNN or network slice information required for establishing a PDU session to access the EES, etc.

Although the service provisioning operation between the ECS and the EEC was described in the aforementioned embodiments of the disclosure, the embodiments may be equally applied to an EEC registration or EAS discovery operation between the EEC and the EES. For example, the EEC may obtain information about the vEES by providing information same with the information provided to the hECS to the hEES.

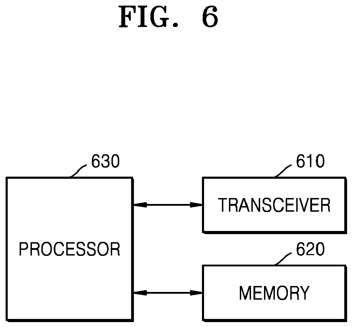

FIG. 6 is a diagram for describing a structure of a UE, according to an embodiment of the disclosure.

The UE as described in connection with FIGS. 1 to 5 may correspond to the UE of FIG. 6. Referring to FIG. 6, the UE may include a transceiver 610, a memory 620, and a processor 630. The transceiver 610, the processor 630, and the memory 620 may operate according to the aforementioned communication method of the UE. Components of the UE are not, however, limited thereto. For example, the UE may include more or fewer elements than described above. In addition, the transceiver 610, the processor 630, and the memory 620 may be implemented in a single chip. The processor 630 may include one or more processors.

The transceiver 610 is a collective term of a UE transmitter and a UE receiver, and may transmit or receive a signal to or from a BS, NF or another UE. The signals to be transmitted to or received from the BS, the NF, an edge data network entity or the other UE may include control information and data. For this, the transceiver 610 may include an RF transmitter for up-converting the frequency of a signal to be transmitted and amplifying the signal and an RF receiver for low-noise amplifying a received signal and down-converting the frequency of the received signal. It is merely an example of the transceiver 610, and the elements of the transceiver 610 are not limited to the RF transmitter and RF receiver.

In addition, the transceiver 610 may receive a signal on a wireless channel and output the signal to the processor 630, and transmit a signal output from the processor 630 on a wireless channel.

The memory 620 may store a program and data required for operation of the UE. Furthermore, the memory 620 may store control information or data included in a signal obtained by the UE. The memory 620 may include a storage medium such as a read only memory (ROM), a random-access memory (RAM), a hard disk, a compact disc ROM (CD-ROM), and a digital versatile disk (DVD), or a combination of storage mediums. Alternatively, the memory 620 may not be separately present but integrated into the processor 630.

The processor 630 may control a series of processes for the UE to be operated according to the embodiments of the disclosure. For example, the processor 630 may receive control signals and data signals through the transceiver 610 and process the received control signals and data signals. The processor 630 may transmit the processed control signal and data signal through the transceiver 610. The processor 630 may be provided in the plural, which may perform operations for controlling the components of the UE by carrying out a program stored in the memory 620.

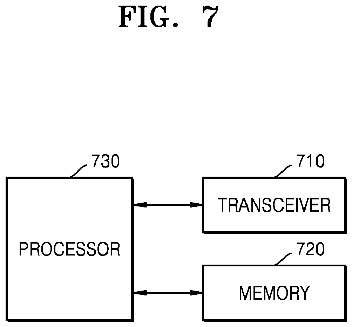

FIG. 7 is a diagram for describing a structure of an entity of an edge computing system, according to an embodiment of the disclosure.

Each of the entities of the edge computing system as described in connection with FIGS. 1 to 6 may correspond to the entity of the edge computing system of FIG. 7. For example, a structure of the EAS, EES or the like may correspond to a structure of the entity of the edge computing system as described in FIG. 7.

Referring to FIG. 7, the entity of the edge computing system may include a transceiver 710, a memory 720, and a processor 730. The transceiver 710, the memory 720, and the processor 730 of the edge computing system may operate according to the aforementioned communication method of the entity of the edge computing system. Components of the entity of the edge computing system are not, however, limited thereto. For example, the entity of the edge computing system may include more or fewer elements than described above. In addition, the transceiver 710, the processor 730, and the memory 720 may be implemented in a single chip. The processor 730 may include one or more processors.

The transceiver 710 is a collective term of a receiver of the entity of the edge computing system and a transmitter of the entity of the edge computing system, and may transmit or receive a signal to or from a BS, a UE, an ECS or a network function (NF). The signal to be transmitted to or received from the BS, the UE, the ECS or the NF may include control information and data. For this, the transceiver 710 may include an RF transmitter for up-converting the frequency of a signal to be transmitted and amplifying the signal and an RF receiver for low-noise amplifying a received signal and down-converting the frequency of the received signal. It is merely an example of the transceiver 710, and the elements of the transceiver 710 are not limited to the RF transmitter and RF receiver.

In addition, the transceiver 710 may receive a signal on a wireless channel and output the signal to the processor 730, and transmit a signal output from the processor 730 on a wireless channel.

The memory 720 may store a program and data required for an operation of the entity of the edge computing system. Furthermore, the memory 720 may store control information or data included in a signal obtained by the entity of the edge computing system. The memory 720 may include a storage medium such as a ROM, a RAM, a hard disk, a CD-ROM, and a DVD, or a combination of storage mediums. Alternatively, the memory 720 may not be separately present but integrated into the processor 730.

The processor 730 may control a series of processes for the entity of the edge computing system to operate in accordance with the embodiments of the disclosure. For example, the processor 730 may receive control signals and data signals through the transceiver 710 and process the received control signals and data signals. The processor 730 may transmit the processed control signal and data signal through the transceiver 710. The processor 730 may be provided in the plural, which may perform operations for controlling the components of the entity of the edge computing system by carrying out a program stored in the memory 720.

Methods according to the claims of the disclosure or the embodiments described in the specification may be implemented in hardware, software, or a combination of hardware and software.

When implemented in software, a computer-readable storage medium storing one or more programs (software modules) may be provided. The one or more programs stored in the computer-readable storage medium are configured for execution by one or more processors in an electronic device. The one or more programs may include instructions that cause the electronic device to perform the methods in accordance with the claims of the disclosure or the embodiments described in the specification.

The programs (software modules or software) may be stored in a RAM, a nonvolatile memory including a flash memory, a ROM, an electrically erasable programmable ROM (EEPROM), a magnetic disc storage device, a CD-ROM, a DVD or other types of optical storage device, and/or a magnetic cassette. Alternatively, the programs may be stored in a memory including a combination of some or all of them. Each of the memories may be provided in the plural.

The program may also be stored in an attachable storage device that may be accessed over a communication network including the Internet, an intranet, a local area network (LAN), a wide LAN (WLAN), or a storage area network (SAN), or a combination thereof. The storage device may be connected to an apparatus for performing the embodiments of the disclosure through an external port. Furthermore, an extra storage device in the communication network may access a device that performs the embodiments of the disclosure.

In the embodiments of the disclosure, a component is represented in a singular or plural form. It should be understood, however, that the singular or plural representations are selected appropriately according to the situations presented for convenience of explanation, and the disclosure is not limited to the singular or plural form of the component. Further, the component expressed in the plural form may also imply the singular form, and vice versa.

Several embodiments of the disclosure have been described, but a person of ordinary skill in the art will understand and appreciate that various modifications can be made without departing the scope of the disclosure. Thus, it will be apparent to those of ordinary skill in the art that modifications to the embodiments of the disclosure based on the technical idea of the disclosure are also feasible. Furthermore, the embodiments may be operated by being combined with one another if necessary. For example, parts of an embodiment of the disclosure and another embodiment of the disclosure may be combined to operate the UDM, the vECS, the hECS, the UE, etc. The embodiments of the disclosure may be equally applied to other communication systems, and other modifications of the embodiments may also be made without departing from the scope of the disclosure.

Specific embodiments of the disclosure have thus been described, but it will be understood that various modifications can be made without departing from the scope of the disclosure. Thus, it will be apparent to those ordinary skilled in the art that the disclosure is not limited to the embodiments as described above, but can encompass not only the appended claims but the equivalents.

## Claims

1. An operation method of a home edge configuration server (hECS) in a wireless communication system, the operation method comprising:
receiving, from a user equipment (UE), a first service provisioning request including an identifier of a visited public land mobile network (vPLMN) in which the UE is served;
identifying at least one visited edge configuration server (vECS) available in the vPLMN in case that a roaming status of the UE is identified based on the identifier of the vPLMN; and
transmitting, to the UE, a provisioning response message including information about the identified at least one vECS,
wherein a second service provisioning request message is transmitted to one of the at least one vECS, from the UE, based on the information about the at least one vECS.

2. The operation method of claim 1, further comprising:
receiving, from a UDM, roaming status information of the UE including information about the vPLMN of the UE in response to reception of the first service provisioning request; and
identifying an identifier of the vPLMN of the UE, based on the received information about the vPLMN.

3. The operation method of claim 1, wherein:
the information about at least one vECS comprises identifier and address information of the at least one vECS, identification information of an edge computing service provider (ECSP), data network name (DNN) and network slice information required to establish a protocol data unit (PDU) session for accessing the at least one vECS, and
the provisioning response message further comprises an indicator indicating a service provisioning failure and a failure cause value indicating a need for redirection due to roaming.

4. The operation method of claim 1, further comprising:
when a roaming event of the UE occurs, transmitting a provisioning response message including information about at least one vECS available in a vPLMN of the UE of which the roaming event occurs.

5. The operation method of claim 1, wherein the second service provisioning request message comprises an identifier of a home public land mobile network (hPLMN) and information about the hECS.

6. An operation method of a user equipment (UE) in a wireless communication system, the operation method comprising:
transmitting, to a home edge configuration server (hECS), a first service provisioning request including an identifier of a visited public land mobile network (vPLMN) in which the UE is served;
receiving a provisioning response message including information about at least one vECS available in the vPLMN in response to the first service provisioning request, based on identification of roaming status of the UE; and
transmitting a second service provisioning request message to one of the at least one vECS, based on the information about the at least one vECS.

7. The operation method of claim 6, wherein:
the information about the at least one vECS comprises identifier and address information of the at least one vECS, identification information of an edge computing service provider (ECSP), a data network name (DNN) and network slice information required to establish a protocol data unit (PDU) session for accessing the at least one vECS, and
the provisioning response message further comprises an indicator indicating a service provisioning failure and a failure cause value indicating a need for redirection due to roaming.

8. The operation method of claim 6, wherein:
when a roaming event of the UE occurs, receiving a provisioning response message including information about at least one vECS available in a vPLMN of the UE of which the roaming event occurs.

9. The operation method of claim 6, wherein the second service provisioning request message comprises an identifier of a home public land mobile network (hPLMN) and information about the hECS.

10. A home edge configuration server (hECS) in a wireless communication system, the hECS comprising:
a transceiver; and
a processor coupled with the transceiver, wherein the processor is configured to
receive, from a user equipment (UE), a first service provisioning request including an identifier of a visited public land mobile network (vPLMN) in which the UE is served,
identify at least one visited edge configuration server (vECS) available in the vPLMN in case that a roaming status of the UE is identified based on the identifier of the vPLMN, and
transmit, to the UE, a provisioning response message including information about the identified at least one vECS,
wherein a second service provisioning request message is transmitted to one of the at least one vECS, from the UE, based on the information about the at least one vECS.

11. The hECS of claim 10, wherein the processor is configured to:
receive, from a UDM, roaming status information of the UE including information about the vPLMN of the UE in response to reception of the first service provisioning request, and
identify an identifier of the vPLMN of the UE, based on the received information about the vPLMN.

12. The hECS of claim 10, wherein the information about the at least one vECS comprises identifier and address information of the at least one vECS, identification information of an edge computing service provider (ECSP), a data network name (DNN) and network slice information required to establish a protocol data unit (PDU) session for accessing the at least one vECS, and
wherein the provisioning response message further comprises an indicator indicating a service provisioning failure and a failure cause value indicating a need for redirection due to roaming.

13. A user equipment (UE) in a wireless communication system, the UE comprising:
a transceiver; and
a processor coupled with the transceiver, wherein the processor is configured to
transmit, to a home edge configuration server (hECS), a first service provisioning request including an identifier of a visited public land mobile network (vPLMN) in which the UE is served,
receive a provisioning response message including information about at least one visited edge configuration server (vECS) available in the vPLMN in response to the first service provisioning request, based on identification of roaming status of the UE, and
transmit a second service provisioning request message to one of the at least one vECS, based on the information about the at least one vECS.

14. The UE of claim 13, wherein the information about the at least one vECS comprises identifier and address information of the at least one vECS, identification information of an edge computing service provider (ECSP), a data network name (DNN) and network slice information required to establish a protocol data unit (PDU) session for accessing the at least one vECS, and
wherein the provisioning response message further comprises an indicator indicating a service provisioning failure and a failure cause value indicating a need for redirection due to roaming.

15. The UE of claim 13, wherein the processor is configured to:
when a roaming event of the UE occurs, receive a provisioning response message including information about at least one vECS available in a vPLMN of the UE of which the roaming event occurs.
